(19) Europäisches Patentamt
European Patent Office
Office européen des brevets

(11) **EP 1 757 430 B1**

(12) **EUROPEAN PATENT SPECIFICATION**

(45) Date of publication and mention
of the grant of the patent:
**01.08.2012 Bulletin 2012/31**

(51) Int Cl.:
***B29C 49/02*** *(2006.01)*     ***B29B 11/12*** *(2006.01)*
***B29K 67/00*** *(2006.01)*     *B29C 35/08* *(2006.01)*

(21) Application number: **05720667.4**

(22) Date of filing: **08.03.2005**

(86) International application number:
**PCT/JP2005/004396**

(87) International publication number:
**WO 2005/123366 (29.12.2005 Gazette 2005/52)**

(54) **PREFORM**

VORFORMLING

PRÉFORME

(84) Designated Contracting States:
**DE FR GB IT**

(30) Priority: **17.06.2004 JP 2004179056**

(43) Date of publication of application:
**28.02.2007 Bulletin 2007/09**

(73) Proprietor: **TOYO SEIKAN KAISHA, LTD.
Tokyo 100-0011 (JP)**

(72) Inventors:
• **KITANO, Y.;
c/o Toyo Seikan Group Corp. R & Dev.;
Yokohama-shi
Kanagawa 240-0062 (JP)**

• **KIKUCHI, A.;
c/o Toyo Seikan Group Corp. R & Dev.;
Yokohama-shi
Kanagawa 240-0062 (JP)**

(74) Representative: **Manley, Nicholas Michael
W.P. Thompson & Co.
Coopers Building
Church Street
Liverpool L1 3AB (GB)**

(56) References cited:
**JP-A- 2000 238 734     JP-A- 2004 148 616
US-A- 4 820 795**

## Description

(Technical Field)

The present invention relates to a preform obtained by the compression forming and a blow-formed container obtained by draw blow-forming the preform. More specifically, the invention relates to a preform having excellent dimensional stability and a draw blow-formed container having a uniform thickness and excellent appearance.

(Background Art)

Draw blow-formed plastic containers and, particularly, biaxially drawn polyester containers have nowadays been generally used for such applications as containing liquids like liquid detergent, shampoo, cosmetics, soy source, source, etc. as well as for containing carbonated beverages like beer, coke, cider, fruit juice, mineral water, etc. owing to their excellent transparency and a suitable degree of gas barrier property.

A biaxially drawn polyester container is formed by a method of forming, in advance, a preform of an amorphous polyester with a bottom having a size considerably smaller than the size of the finally obtained container by injection-molding a polyester resin, pre-heating the preform at a drawing temperature, tension-drawing the preform in the axial direction in a blowing metal mold, and blow-drawing the preform in the circumferential direction (see, for example, JP-A-4-154535).

The preform with the bottom has a shape that includes a mouth-and-neck portion that corresponds to the mouth-and-neck portion of the container and the cylindrical portion with a bottom that is to be draw blow-formed, the shape being, usually, like that of a test tube as a whole, and the mouth-and-neck portion forming engaging means to engage with an open end for sealing or with a closure. From the necessity of injection molding, further, a gate portion is necessarily formed to protrude outward from the center of the bottom portion.

It has been known already to produce the preform with the bottom by compression-forming a resin. That is, there has been proposed a method of producing a preform by cutting and holding a molten resin mass extruded from the extruder, feeding it into a female mold, and compression-forming the preform in the female mold by press-inserting a male mold into the female mold (JP-A-2000-280248).

JP 2000-238734 A discloses a bottle formed by biaxial orientation blow molding of thermoplastic resin, having a mouth and neck part, a shoulder part connected to the mouth and neck part, a trunk part and a bottom. The bottom part is a self-standing structure, and includes the annular ground contact part of a bottom circumference and upward expanded central dome part. A preform is made by compression molding, in particular, one-step compression molding of polyester, polypropylene or the like, and then is subjected to biaxial orientation blow molding. The centre of the bottom is thereby formed in a manner which is not affected by residual distortion due to fluid orientation.

US 4820795 A discloses a polyester vessel having mouth, side wall and bottom portions formed of a polyester composed mainly of ethylene terephthalate units. The thermoplastic polyester is a polyester containing a catalyst residue in an amount smaller than 1000 ppm as the metal and in the thermoplastic polyester constituting the bottom portion of the vessel, the ratio of the degree of thermal crystallization is lower than 90%.

(Disclosure of the Invention)

In producing the preform by the injection molding, however, the melt-plasticized resin is injected into a cavity through a nozzle, a sprue, a runner and a gate. That is, the resin resides in the injection-molding machine for extended periods of time accounting for a cause of deterioration of the resin. In particular, the inherent viscosity and the molecular weight of the polyester resin decrease due to the thermal decomposition making it difficult to obtain a satisfactory mechanical strength. Besides, the gate portion and the vicinity thereof specific to the preform obtained by the injection molding tend to be whitened. Therefore, the bottle obtained by draw blow-forming the preform poses such problems as deteriorated appearance like whitening in the bottom portion and crazing, and poor shock resistance.

On the other hand, the preform obtained by the compression forming is free from the above-mentioned problems inherent in the preform obtained by the injection molding, and features smooth surface without whitening or crazing in the bottom portion accompanied, however, by a problem different from that of the injection molding.

That is, the preform formed by the compression forming tends to be distorted due to a local drop in the temperature of the resin extruded from the extruder. This tendency appears conspicuously near the mouth-and-neck portion to where the resin flows over a distance longer than the distance to the bottom portion of the preform. The preform that is distorted has poor dimensional stability before and after the crystallization of, particularly, the mouth-and-neck portion. When the preform is biaxially draw blow-formed, further, the formed product that is obtained has irregular thickness and is often scarred.

It is, therefore, an object of the present invention to provide a preform that is compression-formed being distorted little and featuring excellent dimensional stability.

Another object of the present invention is to provide a draw blow-formed container having a uniform thickness without irregularity in the thickness, and without scars or wrinkles.

According to the present invention, there is provided a preform comprising a mouth portion having an opening portion, a bottom and a neck ring at the mouth portion, said perform being formed by compression forming and having at least a layer of a polyester resin, the ratio of a length from under the neck ring to the bottom to the outer diameter of the opening of the mouth portion being smaller than 3.5,characterised in that the pressure forming maintains a forming cycle as expressed by the time from when the molten resin is cut until when the compression forming is completed of 3 to 18 seconds, and a temperature difference $\Delta Tc$ or under the neck ring represented by the following formula (1),

$$\Delta Tc = Tc_2 - Tc_1 \qquad --- (1)$$

wherein $Tc_1$ is a temperature-elevating peak crystallization temperature of the polyester layer cut out from the preform as measured by using a differential scanning calorimeter (DSC), and $Tc_2$ is a temperature-elevating peak crystallization temperature of the polyester layer measured by quickly cooling it after having measured $Tc_1$ and having melted it, is not larger than 15°C.

In the preform of the present invention, an important feature resides in that the temperature difference Tc at the center of the bottom of the polyester layer or under the neck ring represented by the above formula (1) is not larger than 15°C.

That is, in the preform formed by the compression forming as described above, the forming distortion is occurring due to the fact that the temperature locally drops in the molten resin mass during the compression forming and that the molten resin flows in the compression metal mold. The forming distortion appears conspicuously particularly at the mouth-and-neck portion to where the molten resin flows over a long distance in the compression metal mold. When this portion is crystallized, it becomes difficult to maintain the size posing a problem of poor dimensional stability before and after the crystallization.

From this point of view, it is an object of the present invention to provide a preform in which the forming distortion occurs in decreased amounts, which temperature is based on a discovery that the preform of which the temperature difference $\Delta Tc$ at the center of the bottom of the polyester layer or under the neck ring represented by the following formula (1) which is not larger than 15°C permits the forming distortion to occur little and does not spoil the dimensional stability even when the mouth-and-neck portion of the preform is crystallized.

Further, the draw blow-formed container obtained by draw blow-forming the preform of the invention has little irregularity in the thickness and exhibits excellent appearance without being whitened, scarred or wrinkled.

According to the present invention, the preform in a state of having the forming distortion (fluidized orientation) caused by compression formation is measured for its temperature-elevating peak crystallization temperature ($Tc_1$) by using the differential scanning calorimeter (DSC), followed by melting to relax the forming distortion in the polyester layer after having measured $Tc_1$, and the preform is quickly cooled to measure a temperature-elevating peak crystallization temperature ($Tc_2$) inherent in the polyester resin from which the forming hysteresis has been eliminated. Namely, according to the present invention, it was discovered that the temperature differential $\Delta Tc$ between them directly represents the forming distortion of the preform and that the preform having $\Delta Tc$ which is not greater than 15°C is distorted little, exhibits excellent dimensional stability and appearance without irregularity in the thickness despite of crystallization in the mouth portion and blow forming.

These facts will become obvious from the results of Examples appearing later. That is, in the preform having $\Delta Tc$ which is larger than 15°C, the amount of deformation at the end of the mouth portion when the mouth portion is crystallized becomes as great as 0.3 mm or more deteriorating the flatness at the end of the mouth portion (Comparative Examples 1 and 2) while the preform having $\Delta Tc$ which is not larger than 15°C has the amount of deformation which is smaller than 0.3 mm, from which it is obvious that the preform of the present invention features very superior dimensional stability (Examples 1 to 7) to those of Comparative Examples.

(Brief Description of the Drawings)

Fig. 1 is a side view illustrating a preform according to the present invention; and
Fig. 2 is a view illustrating a compression forming apparatus that is used for forming a multi-layer preform of the present invention.

(Best Mode for Carrying Out the Invention)

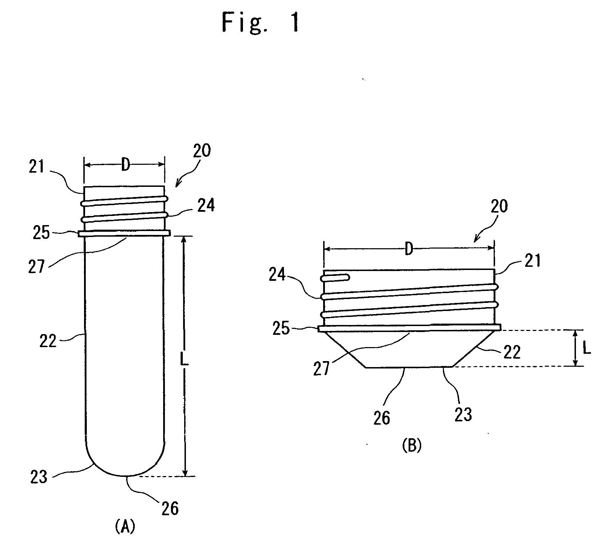

Fig. 1 illustrates a preform of the present invention, wherein Fig. 1(A) illustrates a preform used for an ordinary PET bottle and Fig. 1(B) illustrates a shallow wide-mouth preform used for a wide-mouth bottle. Referring to Fig. 1, a preform 20 of the invention includes a mouth-and-neck portion 21, a body wall 22 and a bottom 23. Generally, a threaded portion 24 is formed on the mouth-and-neck portion 21, and a neck ring 25 is formed under the threaded portion 24. The temperature difference $\Delta Tc$ of the invention expressed by the above formula (1) can be measured from the polyester layer cut out from the central portion 26 of the bottom 23 of the preform or from a portion 27 just under the neck ring 25, or from the polyester layer cut out from the corresponding portions of a draw blow-formed container obtained by draw blow-forming the preform.

In the present invention, attention is given to the temperature-elevating peak crystallization temperature at the center of the bottom of the polyester layer of the preform or at a portion under the neck ring thereof. This is because, in measuring the forming distortion of the preform that has been draw blow-formed into a container relying on an ordinary one-step blow forming method, the center of the bottom is, usually, little affected by drawing or heating and is close to the state of the preform, and is the most desired place to take a measurement. When the preform is draw blow-formed by the two-step blow-forming method, however, the bottom is drawn through the primary blowing step and is, thereafter, heated through a step of heat shrinking, whereby the distortion at the center of the bottom of the container is relaxed. Therefore, the forming distortion of the preform is not favorably reflected at the center of the bottom of the container that is formed. When the distortion at the center of the bottom has been relaxed like that of the two-step blow-forming method, therefore, the portion under the neck ring is a place where the forming distortion is remaining affected by neither the drawing nor the heating, making it possible to approximately find, from the container that is formed, the temperature-elevating peak crystallization temperature of the polyester layer of the preform.

In the draw blow-formed container of the invention, therefore, the center of the bottom or a portion under the neck ring is specified to be a place where the forming distortion of the preform can be measured. In effecting the draw blow forming based on the ordinary one-step blow forming, further, the temperature difference $\Delta Tc$ of the polyester layer may not be larger than 15°C at both the center of the bottom and the portion under the neck ring as a matter of course, or the temperature difference $\Delta Tc$ of the polyester layer may not be larger than 15°C at either one of these portions.

In the case of the draw blow forming based on the two-step blow forming, further, the temperature difference $\Delta Tc$ of the polyester layer at a portion under the neck ring may not be larger than 15°C.

In the case of the multi-layer preform having the polyester layer, further, the sample can be cut out from the polyester layer and measured similarly.

(Polyester Resin)

The polyester resin used for the present invention may be the one comprising a dicarboxylic acid component and a diol component, that has heretofore been used for forming a conventional preform by the compression forming.

It is desired that the dicarboxylic acid component is the one in which not less than 50% and, particularly, not less than 80% of the dicarboxylic acid component is a terephthalic acid from the standpoint of mechanical properties and thermal properties. It is, however, also allowable to use the dicarboxylic acid which contains the carboxylic acid component other than the terephthalic acid, as a matter of course. As the carboxylic acid component other than the terephthalic acid, there can be exemplified isophthalic acid, naphthalenedicarboxylic acid, p-β-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

It is desired that the diol component is the one in which not less than 50% and, particularly, not less than 80% of the diol component is ethylene glycol from the standpoint of mechanical properties and thermal properties. As the diol component other than the ethylene glycol, there can be exemplified 1,4-butanediol, propylene glycol, neopentyl glycol, 1,6-hexylene glycol, diethylene glycol, triethylene glycol, cyclohexane dimethanol, ethylene oxide adduct of bisphenol A, glycerol and trimethylolpropane.

Further, polyfunctional components may be added to adjust the melt viscosity and the melt tension at the time of melt-extruding the resin to prevent draw down or the like. The polyfunctional components may be trifunctional or higher functional polybasic acids and polyhydric alcohols. Examples include polybasic acids such as trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid, biphenyl-3,4,3',4'-tetracarboxylic acid, and polyhydric alcohols such as pentaerythritol, glycerol, trimethylolpropane, 1,2,6-hexanetriol, sorbitol, 1,1,4,4-tetrakis(hydroxymethyl) cyclohexane and the like.

In order to form the preform by the compression forming, it is desired that the polyester resin used for the present invention has an intrinsic viscosity of 0.70 to 0.90 dL/g and, particularly, 0.75 to 0.85 dL/g (as measured by using a mixed solvent of phenol/tetrachloroethane at a weight ratio of 1:1 at 30°C).

To satisfy the heat resistance and workability of the preform or the polyester container, further, it is desired that the polyester resin has a melting point (Tm) of lower than 265°C and, particularly, 220 to 255°C. It is further desired that the glass transition point is not lower than 30°C and, particularly, in a range of 50 to 120°C.

The polyester resin used in the present invention may be blended with known blending agents for resins, such as a coloring agent, an antioxidizing agent, a stabilizer, various antistatic agents, a parting agent, a lubricant, a nucleating agent and the like in amounts of ranges in which they do not impair the quality of the finally formed product according to known recipe.

(Preform)

The preform of the present invention may be a single-layer preform of the polyester resin only or a multi-layer preform having a layer of the polyester resin and a layer of any other thermoplastic resin so far as the temperature difference ΔTc at the center of the bottom of the polyester layer or at the portion under the neck ring represented by the above formula (1) is not larger than 15°C.

As the thermoplastic resin other than the polyester resin, there can be used any resin provided it can be draw blow-formed and heat-crystallized. Though not necessarily limited thereto only, examples thereof may include olefin-type resins such as polyethylene, polypropylene, ethylene/propylene copolymer, ethylene/vinyl alcohol copolymer and cyclic olefin polymer, and polyamide resins such as xylylene group-containing polyamide. There can be further used an oxygen-absorbing gas-barrier resin composition obtained by blending a xylylene group-containing polyamide with a diene compound and a transition metal catalyst, or a recycled polyester (PCR (resin regenerated from the used bottles), SCR (resin by-produced in the production plant) or a mixture thereof). It is desired that the recycled polyester resins have intrinsic viscosities (IV) in a range of 0.65 to 0.75 dL/g as measured by the above-mentioned method.

The recycled polyester may be used alone or as a blend with a virgin polyester. When the recycled polyester has a decreased intrinsic viscosity, it is desired to use it as a blend with the virgin polyester. In this case, the blending ratio of the recycled polyester to the virgin polyester is desirably from 1:5 to 5:1 by weight.

Further, the inner layer or the outer layer may be adhered to the intermediate layer via an adhesive resin. As the adhesive resin, there can be used an acid-modified olefin resin graft-polymerized with maleic acid, an amorphous polyester resin, or a polyamide resin.

Further, the thermoplastic resins other than the polyester resin may be blended with various additives for resins like the polyester resin for compression forming.

Though not limited thereto only, the layer constitutions of the multi-layer preforms of the present invention are as described below. Abbreviations in the following multi-layer structures are PET: polyester resin, GBR: gas-barrier resin, PCR: recycled polyester resin, ADR: adhesive resin, OAR: oxygen-absorbing resin composition, COC: cyclic olefin copolymer.

| | |
|---|---|
| Three-layer structure: | PET/GBR/PET, PET/PCR/PET |
| | PET/(PET+PCR)/PET |
| | PET/(PET+OAR)/PET |
| Four-layer structure: | PET/GBR/PCR/PET |
| | PET/GBR/OAR/PET |
| | PET/GBR/COC/PET |
| Five-layer structure: | PET/ADR/GBR/ADR/PET |
| | PET/ADR/OAR/ADR/PET |
| | PET/GBR/PCR/GBR/PET |
| | PET/ADR/(GBR+OAR)/ADR/PET |
| | PET/(PET+OAR)/PET/(PET+OAR)/PET |
| Six-layer structure: | PET/ADR/GBR/ADR/PCR/PET |
| | PET/ADR/OAR/ADR/PCR/PET |
| Seven-layer structure: | PET/PCR/ADR/GBR/ADR/PCR/PET |
| | PET/ADR/GBR/ADR/OAR/ADR/PET |

(Forming the Preform)

According to the present invention, the preform can be formed by compression-forming the polyester resin described above. Here, what is important is to so form the preform as to decrease the forming distortion and that the above-mentioned temperature difference ΔTc is not larger than 15°C.

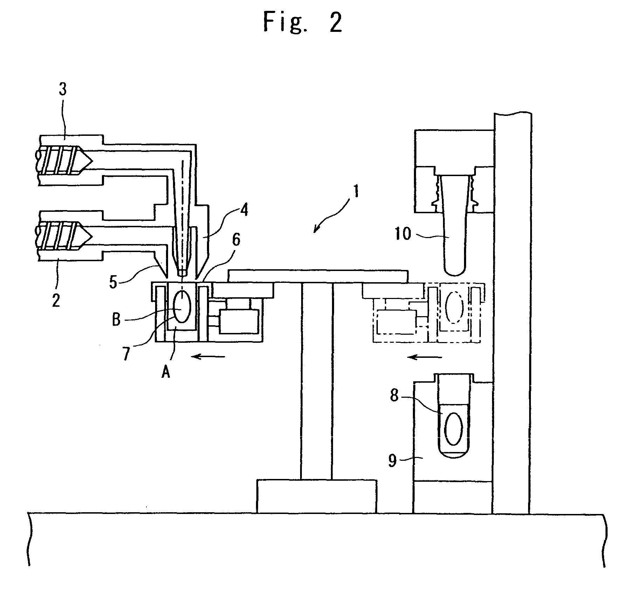

Fig. 2 is a view illustrating a compression-forming apparatus used for forming a multi-layer preform. In the compression-forming apparatus which as a whole is designated at 1, a resin A for forming the inner and outer layers, which is a polyester resin for compression forming of the invention, is continuously fed from a main extruder 2, and a resin B for forming the intermediate layer, which is a gas-barrier resin, is intermittently fed from a sub-extruder 3. The two resins meet together in a multi-layer die 4 and are melt-extruded from a nozzle 5 provided under the multi-layer die 4 in a manner that the resin B is sealed in the resin A. A resulting composite molten resin 7 that is extruded is cut into a predetermined size at a portion where there is no intermediate layer by cutting means 6 that moves in a horizontal direction. Immediately after having been cut, a mass 8 of the composite molten resin that is cut is held by a jig and is conveyed into a female mold 9 of the compression-forming apparatus constituted by the female mold 9 and a male mold 10. The mass 8 of the composite molten resin in the female mold 9 is compression-formed by the male mold 10 to form a multi-layer preform having the intermediate layer sealed by the inner layer and the outer layer.

To decrease the forming distortion of the preform and to suppress the temperature difference $\Delta Tc$ to be not larger than 15°C, the forming method of the invention employs means as described below.

As described earlier, the forming distortion stems from the cooling of the molten resin mass. It is therefore desired to shorten the time (excluding cooling time)(forming cycle) from when the molten resin extruded from the extruder is cut until the compression forming is completed thereby to prevent a drop in the temperature of the molten resin, or to take into consideration the conditions of compression forming in addition to preventing the drop of temperature by shortening the above time. When the preform of the same resin and of the same shape is to be formed, it is desired to effect the compression in a forming cycle which is 95 to not larger than 50% of the conventional forming cycle though it may vary depending upon the shape of the preform. When the preforms are made of the same resin in the same shape as will become obvious from Example 6 and Comparative Example 1 appearing later, the temperature difference $\Delta Tc$ can be decreased by about 63% at a portion under the neck ring and by about 69% at the bottom when the forming cycle is set to be 3 seconds (decreased to be 15%) as compared to the case of when the forming cycle is 20 seconds.

Further, the temperature difference $\Delta Tc$ varies depending upon the shape of the preform. As will become obvious from Example 1 and Comparative Example 3 appearing later as shown in Fig. 1, very different temperature differences $\Delta Tc$ are assumed by a preform having the ratio L/D of the length L from under the neck ring to the bottom to the outer diameter D of the top panel of the mouth portion of 0.47 and by a preform having the ratio L/D of 4.4. In the present invention, therefore, it is particularly desired that the preform has the ratio L/D of the length L from under the neck ring to the bottom to the outer diameter D of the top panel of the mouth portion of not larger than 3.5.

Therefore, the preform and the blow-formed container of the present invention can be obtained relying upon either shortening the forming cycle of the preform or shaping the preform, or by employing both means. When the preform has a large ratio L/D, however, it is desired to shorten the cycle of forming the preform.

Further, the forming distortion of the preform is relaxed by heating. Therefore, the preform may be uniformly heated for about 0.1 to 1 second such that the surface temperature of the preform after compression formed becomes 200 to 250°C.

(Polyester Container)

The blow-formed polyester container of the present invention can be obtained by draw-forming the above preform.

In the draw blow-forming, the preform of the present invention is heated at a drawing temperature, drawn in the axial direction and is biaxially draw blow-formed in the circumferential direction to produce the biaxially drawn container.

The forming of preform and the draw blow forming can be applied not only to the cold parison system but also to the hot parison system which effects the draw blow forming without completely cooling the preform.

Prior to the draw blow, the preform, as required, is pre-heated to a temperature suited for the drawing by such means as the hot air, infrared-ray heater or high(radio)-frequency induction heating. In the case of the polyester, the temperature range is 85 to 120°C and, particularly, 95 to 110°C.

The preform is fed into the known draw blow-forming apparatus, is set in a metal mold, is tension-drawn in the axial direction by pushing a drawing rod, and is draw-formed in the circumferential direction by blowing the fluid. Generally, it is desired that the metal mold temperature is in a range of room temperature to 190°C. When the thermal fixing is to be effected by the one-molding method as will be described later, it is desired that the metal mold temperature is set to be 120 to 180°C.

The drawing ratio in the finally obtained polyester container is desirably 1.5 to 25 times in terms of an area ratio and, particularly, 1.2 to 6 times in terms of a drawing ratio in the axial direction and 1.2 to 4.5 times in terms of a drawing ratio in the circumferential direction.

The blow draw-formed polyester container of the present invention can be thermally fixed by known means. The thermal fixing can be conducted by a one-molding method in a blow-forming metal mold or by a two-molding method in a metal mold for thermal fixing separate from the blow-forming metal mold. The temperature for the thermal fixing is in a range of, suitably, 120 to 180°C.

As another draw blow-forming method, there may be employed, as disclosed in Japanese Patent No. 2917851 assigned to the present applicant, a two-step blow-forming method in which the preform is formed into a primary blow-formed body of a size larger than that of the finally formed article by using a primary blow metal mold, and the primary blow-formed article is heat-shrunk and is draw blow-formed by using a secondary blow metal mold to obtain the finally formed article. In the polyester container obtained by this method, the forming distortion has been relaxed in the bottom as described earlier. Therefore, the temperature difference ΔTc must be measured at a portion under the neck ring.

(EXAMPLES)

The invention will be described in further detail by way of Examples to which only, however, the invention is in no way limited.

[Forming a Preform]

A mass of molten resin obtained by cutting a polyethylene terephthalate extruded from a nozzle at a lower portion of a die set at a temperature of 270°C was conveyed into a compression forming apparatus and was compression formed at a compression forming rate (moving speed of the male mold in the compression forming apparatus) of 9 mm/sec. The above process is referred to as forming cycle. The time from when the mass of the molten resin is conveyed into the compressing forming apparatus until when the compression forming starts was varied to adjust the forming cycle.

[DSC Measurement]

The samples (8 mg) cut out in the direction of thickness from portions under the neck ring and from the centers of the bottoms of the preform and of the bottle suitably selected from the formed preforms and bottles, were measured by using a differential scanning calorimeter (DSC 7 manufactured by Perkin

Elmer Co.).

The sample temperature was scanned in order of:

1. Holding at 20°C for 3 minutes;
2. Elevating from 20°C to 290°C at a rate of 10°C/min.;
3. Melting at 290°C for 3 minutes;
4. Quickly cooling down to 20°C at a rate of 300°C/min.;
5. Holding at 20°C for 3 minutes; and
6. Elevated from 20°C to 290°C at a rate of 10°C/min.;

wherein the temperature-elevating peak crystallizing temperature in 2. above is denoted by $Tc_1$ and the temperature-elevating peak crystallizing temperature in 6. above is denoted by $Tc_2$.

[Measurement of Smoothness on the End Surface the Mouth Portion after the Mouth Portion has been Crystallized]

The mouth portion of the preform was crystallized being heated for 2 minutes by adjusting the output of the infrared ray heater of the mouth portion-crystallizing apparatus to be 1200 watts. After the preform of which the mouth portion has been crystallized was cooled down to a sufficient degree, the end surface of the mouth portion after crystallized was measured for its smoothness by using a circular cylindrical shape-measuring instrument (RA-114D, Mitutoyo Co.) to find a difference between a maximum value thereof and a minimum value thereof, and the difference was regarded as the smoothness of the end surface of the mouth portion.

The measurement was taken from five samples in Examples and in Comparative Examples, and the smoothness was an average value thereof.

[Evaluating the Sealing of the Biaxially Draw Blow-Formed Bottles]

The above-mentioned preform after the mouth portion has been crystallized was biaxially draw blow-formed by the one-step blow-forming method, and was heat-set at 150°C for 1.5 seconds to obtain a heat-resistant PET bottle. By utilizing the fact that a diethyl-p-phenylenediamine undergoes the discoloration through the reaction with chlorine, the sealing property was confirmed through the following procedure.

1. Distilled water was heated at 93°C and was charged into the PET bottle together with 0.5% of the diethyl-p-phenylenediamine.
2. A plastic cap was double-seamed.
3. Erected for one minute.
4. Boiled and sterilized under the conditions of 88°C for 5 minutes in a state of being fell down.
5. Immersed and cooled in a 1% sodium hypochlorite solution for 20 minutes.
6. Confirmation of discoloration due to the suction.

The samples were evaluated in a number of 30 in Examples and in Comparative Examples, and were evaluated to be X if even one of them was discolored due to the suction.

(Example 1)

By using a polyethylene terephthalate [RT543CTHP: manufactured by Nihon Unipet Co.] as a polyester resin, there was formed a single-layer preform having a weight of 24.4 g, an overall length of 45 mm, a length L from under the neck ring to the bottom of 23 mm, an outer diameter D of the top panel of the mouth portion of 49 mm, and a ratio L/D of 0.47 in a forming cycle of 8 seconds. A portion under the neck ring of the preform and a portion in the bottom were cut out in the direction of thickness and were measured for their $Tc_1$ and $Tc_2$ by using the DSC to find $\Delta Tc$. The mouth portion of the preform formed under the same conditions was crystallized and was measured for its smoothness. Thereafter, a biaxially draw blow-formed bottle was formed and was evaluated for its sealing property.

(Example 2)

A single-layer preform was formed in the same manner as in Example 1 with the exception of setting the cycle for forming the preform to be 13 seconds, and was measured by using the DSC, measured for its smoothness after the mouth portion has been crystallized, and from which a biaxially draw blow-formed bottle was formed and was evaluated for its sealing property.

(Example 3)

A single-layer preform was formed in the same manner as in Example 1 with the exception of setting the cycle for forming the preform to be 18 seconds, and was measured by using the DSC, measured for its smoothness after the mouth portion has been crystallized, and from which a biaxially draw blow-formed bottle was formed and was evaluated for its sealing property.

(Example 4)

A single-layer preform was formed in the same manner as in Example 1 with the exception of setting the cycle for forming the preform to be 28 seconds, and was measured by using the DSC, measured for its smoothness after the mouth portion has been crystallized, and from which a biaxially draw blow-formed bottle was formed and was evaluated for its sealing property.

(Example 5)

A single-layer preform was formed in the same manner as in Example 1 but using a polyethylene terephthalate [J125T: manufactured by Mitsui Chemicals Inc.] as a polyester resin, the single-layer preform having a weight of 26.5 g, an overall length of 79 mm, a length L from under the neck ring to the bottom of 58 mm, an outer diameter D of the top panel of the mouth portion of 25 mm, and a ratio L/D of 2.3, and was measured by using the DSC, measured for its smoothness after the mouth portion has been crystallized, and from which a biaxially draw blow-formed bottle was formed and was evaluated for its sealing property.

(Example 6)

A single-layer preform was formed in the same manner as in Example 1 but setting the cycle for forming the preform to be 3 seconds, the single-layer preform having a weight of 28.0 g, an overall length of 96 mm, a length L from under the neck ring to the bottom of 78 mm, an outer diameter D of the top panel of the mouth portion of 25 mm, and a ratio L/D of 3.1, and was measured by using the DSC, measured for its smoothness after the mouth portion has been crystallized, and from which a biaxially draw blow-formed bottle was formed and was evaluated for its sealing property.

(Example 7)

The biaxially draw blow-formed bottle of Example 6 was measured by using the DSC, measured for its smoothness of the mouth portion and was evaluated for its sealing property.

(Comparative Example 1)

A single-layer preform was formed in the same manner as in Example 6 with the exception of setting the cycle for forming the preform to be 20 seconds, and was measured by using the DSC, measured for its smoothness after the mouth portion has been crystallized, and from which a biaxially draw blow-formed bottle was formed and was evaluated for its sealing property.

(Comparative Example 2)

A single-layer preform was formed in the same manner as in Example 6 but setting the cycle for forming the preform to be 15 seconds, the single-layer preform having a weight of 30.5 g, an overall length of 106 mm, a length L from under the neck ring to the bottom of 88 mm, an outer diameter D of the top panel of the mouth portion of 25 mm, and a ratio L/D of 3.5, and was measured by using the DSC, measured for its smoothness after the mouth portion has been crystallized, and from which a biaxially draw blow-formed bottle was formed and was evaluated for its sealing property.

(Comparative Example 3)

A single-layer preform was formed in the same manner as in Example 1, the single-layer preform having a weight of 90.0 g, an overall length of 166 mm, a length L from under the neck ring to the bottom of 140 mm, an outer diameter D of the top panel of the mouth portion of 32 mm, and a ratio L/D of 4.4, and was measured by using the DSC, measured for its smoothness after the mouth portion has been crystallized, and from which a biaxially draw blow-formed bottle was formed and was evaluated for its sealing property.

(Comparative Example 4)

The biaxially draw blow-formed bottle of Comparative Example 1 was measured by using the DSC, measured for its smoothness of the mouth portion and was evaluated for its sealing property.

## Table 1

| | PET Resin | Under the nech ring | | | Center of bottom | | | L/D (PF shape) Note 2) | Forming cycle (sec) Note 1) | Smoothness (mm) | Sealing property |
|---|---|---|---|---|---|---|---|---|---|---|---|
| | | $Tc_1$ (°C) | $Tc_2$ (°C) | $\Delta Tc$(°C) | $Tc_1$ (°C) | $Tc_2$ (°C) | $\Delta Tc$ (°C) | | | | |
| Ex. 1 | RT543 | 148.6 | 154.3 | 5.7 | 150.6 | 155.3 | 4.7 | 0.47 | 8 | 0.13 | ○ |
| Ex. 2 | RT543 | 148.6 | 155.8 | 7.2 | 150.8 | 155.8 | 5.0 | 0.47 | 13 | 0.15 | ○ |
| Ex. 3 | RT543 | 148.0 | 155.8 | 7.8 | 150.1 | 155.6 | 5.6 | 0.47 | 18 | 0.16 | ○ |
| Ex. 4 | RT543 | 145.6 | 155.8 | 10.1 | 149.1 | 155.8 | 6.4 | 0.47 | 28 | 0.21 | ○ |
| Ex. 5 | J125T | 151.6 | 157.1 | 5.5 | 152.8 | 156.6 | 3.8 | 2.3 | 8 | 0.11 | ○ |
| Ex. 6 | RT543 | 150.8 | 156.8 | 6.0 | 150.8 | 155.8 | 5.0 | 3.1 | 3 | 0.14 | ○ |
| Ex.7 | RT543 | 148.6 | 155.6 | 7.0 | 148.6 | 155.6 | 7.0 | 3.1 | 3 | 0.14 | ○ |
| Comp. Ex. 1 | RT543 | 138.8 | 155.1 | 16.3 | 138.6 | 154.9 | 16.3 | 3.1 | 20 | 0.35 | × |
| Comp. Ex. 2 | RT543 | 140.0 | 155.5 | 15.5 | 140.1 | 155.4 | 15.3 | 3.5 | 15 | 0.36 | × |
| Comp. Ex. 3 | RT543 | 140.4 | 155.6 | 15.2 | 140.5 | 155.6 | 15.1 | 4.4 | 8 | 0.41 | × |
| Comp. Ex. 4 | RT543 | 138.5 | 155.0 | 16.5 | 138.8 | 154.9 | 16.1 | 3.1 | 20 | 0.35 | × |

Note 1) PF-forming cycle (sec) : From when the drop is cut until when the compression forming is Note 2) PF: Preform completed (excluding cooling) .

## EP 1 757 430 B1

**Claims**

**1.** A preform (20) comprising a mouth portion having an opening portion, a bottom (23) and a neck ring (25) at the mouth portion, said preform being formed by compression forming and having at least a layer of a polyester resin, the ratio (L/D) of a length (L) from under (27) the neck ring (25) to the bottom (23) to the outer diameter (D) of the opening of the mouth portion being smaller than 3.5, **characterised in that** the compression forming maintains a forming cycle as expressed by the time from when the molten resin is cut until when the compression forming is completed of 3 to 18 seconds, and a temperature difference $\Delta Tc$ under (27) the neck ring (25) represented by the following formula (1),

$$\Delta Tc = Tc_2 - Tc_1 \qquad --- (1)$$

wherein $Tc_1$ is a temperature-elevating peak crystallization temperature of the polyester layer cut out from the preform as measured by using a differential scanning calorimeter (DSC), and $Tc_2$ is a temperature-elevating peak crystallization temperature of the polyester layer measured by quickly cooling it after having measured $Tc_1$ and having melted it,
is not larger than 15°C.

**Patentansprüche**

**1.** Vorformling (20), umfassend einen Mundabschnitt mit einem Öffnungsabschnitt, einen Boden (23) und einen Halsring (25) an dem Mundabschnitt, wobei der genannte Vorformling durch Druckumformen gebildet ist und mindestens eine Schicht aus einem Polyesterharz aufweist, wobei das Verhältnis (L/D) einer Länge (L) von unten (27) dem Halsring (25) bis zum Boden (23) zum Außendurchmesser (D) der Öffnung des Mundabschnitts kleiner ist als 3,5, **dadurch gekennzeichnet, dass** das Druckumformen einen Umformzyklus aufrechterhält, der ausgedruckt wird durch die Zeit vom Schneiden des geschmolzenen Harzes bis zum Abschluss des Druckumformens von 3 bis 18 Sekunden und eine Temperaturdifferenz $\Delta Tc$ unter (27) dem Halsring (25), dargestellt durch die folgende Formel (1),

$$\Delta Tc = Tc_2 - Tc_1 \qquad ...(1)$$

wobei $Tc_1$ eine temperaturerhöhende Spitzenkristallisationstemperatur der aus dem Vorformling ausgeschnittenen Polyesterschicht ist, gemessen durch Verwenden eines Differential-Scanning-Kalorimeters (DCS),
und $Tc_2$ eine temperaturerhöhende Spitzenkristallisationstemperatur der Polyesterschicht ist, gemessen durch rasches Abkühlen derselben, nachdem $Tc_1$ gemessen und sie geschmolzen wurde,
nicht größer ist als 15 °C.

**Revendications**

**1.** Préforme (20) comprenant une partie d'embouchure ayant une partie d'ouverture, un fond (23) et une bague de col (25) au niveau de la partie d'embouchure, ladite préforme étant formée par formage par compression et ayant au moins une couche de résine polyester, le rapport (L/D) d'une longueur (L) depuis le dessous (27) de la bague de col (25) jusqu'au fond (23) sur le diamètre externe (D) de l'ouverture de la partie d'embouchure étant inférieur à 3,5, **caractérisée en ce que** le formage par compression maintient un cycle de formage exprimé par le temps écoulé entre la coupure de la résine fondue et la fin du formage par compression de 3 à 18 secondes, et une différence de température $\Delta Tc$ sous (27) la bague de col (25) représentée par la formule suivante (1),

$$\Delta Tc = Tc_2 - Tc_1 \qquad ...(1)$$

où $Tc_1$ est une température de cristallisation maximale de hausse de température de la couche de polyester découpée la préforme telle que mesurée en utilisant un calorimètre différentiel à balayage (DSC),
et $Tc_2$ est une température de cristallisation maximale de hausse de température de la couche de polyester mesurée en la refroidissant rapidement après avoir mesuré $Tc_1$ et l'avoir fondue,

n'est pas supérieure à 15˚C.

Fig. 1

(A)

(B)

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4154535 A
- JP 2000280248 A
- JP 2000238734 A
- US 4820795 A
- JP 2917851 B